(19) **Europäisches Patentamt / European Patent Office / Office européen des brevets**

(11) **EP 1 856 713 B1**

(12) # EUROPÄISCHE PATENTSCHRIFT

(45) Veröffentlichungstag und Bekanntmachung des Hinweises auf die Patenterteilung:
**06.05.2015 Patentblatt 2015/19**

(21) Anmeldenummer: **06708602.5**

(22) Anmeldetag: **02.03.2006**

(51) Int Cl.:
*H01J 41/06* (2006.01)    *G01L 21/34* (2006.01)

(86) Internationale Anmeldenummer:
**PCT/EP2006/060397**

(87) Internationale Veröffentlichungsnummer:
**WO 2006/094927 (14.09.2006 Gazette 2006/37)**

(54) **KALTKATHODEN-DRUCKSENSOR**

COLD CATHODE PRESSURE SENSOR

CAPTEUR DE PRESSION A CATHODE FROIDE

(84) Benannte Vertragsstaaten:
**DE FR GB**

(30) Priorität: **09.03.2005 DE 102005010716**

(43) Veröffentlichungstag der Anmeldung:
**21.11.2007 Patentblatt 2007/47**

(73) Patentinhaber: **Inficon GmbH**
**50968 Köln (DE)**

(72) Erfinder:
 • **WETZIG, Daniel**
  **50999 Köln (DE)**
 • **GERDAU, Ludolf**
  **50189 Elsdorf (DE)**

(74) Vertreter: **Von Kreisler Selting Werner - Partnerschaft**
**von Patentanwälten und Rechtsanwälten mbB**
**Deichmannhaus am Dom**
**Bahnhofsvorplatz 1**
**50667 Köln (DE)**

(56) Entgegenhaltungen:
 **DE-A1- 1 539 154    DE-A1- 4 207 906**
 **US-A- 1 596 758    US-A- 5 157 333**

 • **REDHEAD P A: "The magnetron gauge: a cold-cathode vacuum gauge" CAN J PHYSICS; CANADIAN JOURNAL OF PHYSICS NOV 1959 OTTAWA, ONT., CANADA, Bd. 37, Nr. 11, November 1959 (1959-11), Seiten 1260-1271, XP008075863**

Printed by Jouve, 75001 PARIS (FR)

## Beschreibung

Die Erfindung bezieht sich auf einen Kaltkathoden-Drucksensor zum Messen von niedrigen Drücken bzw. Partialdrücken.

Kaltkathoden-Drucksensoren sind Penning-, Magnetron- oder invertierte Magnetron-Druckmesszellen und werden vorwiegend zur Messung eines Gasdruckes bzw. Partial-Gasdruckes im Hochvakuumbereich eingesetzt. Ein Kaltkathoden-Drucksensor weist ein gasdichtes Gehäuse mit einem Testgas-Einlass auf, durch den das Testgas in das Gehäuse gelangt. In dem Gehäuse bildet sich zwischen einer Anode und einer Kathode bei angelegter Hochspannung eine Kaltkathoden-Entladung, wobei der Ionenstrom in der brennenden Entladung nahezu proportional zur Testgas-Teilchendichte in dem Gehäuse ist. Während der Kaltkathoden-Entladung fließen im Bereiche der Anode viele kleine Elektronenringströme. Die Ringstrom-Elektronen stoßen mit Gasmolekülen in dem Gehäuse zusammen. Durch den Elektronenstoß werden die Gasmoleküle und -atome ionisiert, so dass diese zur Kathode fliegen und dort wieder ein Elektron aufnehmen. Die hierbei erzeugten Spannungspulse dienen als Maß für die Teilchendichte, also den Druck des Testgases im Gehäuse.

Bei der Elektronenstoß-Ionisation im Gehäuse und beim Auftreffen der erzeugten Ionen auf die Kathode werden Sekundärelektronen erzeugt, die den Ringstrom im Gehäuse speisen. Mit zunehmender Elektronendichte nimmt die Verlustrate aus den Ringströmen aufgrund von Coulomb-Abstoßung zu, so dass sich ein konstanter Ringstrom im Gehäuse einstellt. Der Aufbau des konstanten Ringstroms erfolgt normalerweise während des Bruchteiles einer Sekunde, und wird als "Zünden" bezeichnet.

Bei sehr niedrigem Gasdruck im Gehäuse ist die Wahrscheinlichkeit für einen Stoß zwischen einem Elektron und einem Gasteilchen ggf. so klein, dass die erzeugten Sekundärelektronen die Elektronenverluste nicht kompensieren können. In diesem Fall wird so lange kein konstanter Ringstrom aufgebaut, bis zufällig die Zahl der Primärelektronen im Gehäuse ausreicht, um das Zünden auszulösen.

Aus diesem Grund wird zum Zünden der Penning-Entladung ggf. eine Strahlungsquelle vorgesehen bzw. eingesetzt. Aus US-A-5,157,333 ist ein Kaltkathoden-Drucksensor bekannt, bei dem in dem Gehäuse eine Strahlungsquelle angeordnet ist, mit der die Entladung gestartet wird. Die Strahlungsquelle erzeugt Photonen, die durch Photoeffekt aus der Metall-Kathode Elektronen auslösen. Bei Metallen beträgt die photoelektrische Austrittsarbeit für Elektronen mehrere Elektronenvolt, beispielsweise für das häufig verwendete Kathoden-Metall Titan 4.33 eV. Für den Photoeffekt muss die Zünd-Strahlung daher eine Wellenlänge von 287 nm aufweisen, was UV-Licht entspricht, dessen Erzeugung aufwendig ist. Die UV-Strahlungsquelle ist innerhalb des Gehäuses angeordnet, da keine geeigneten preiswerten Gehäuse-Materialien existieren, die für UV-Licht ausreichend durchlässig und dennoch gasdicht sind. Die Anordnung der Strahlungsquelle innerhalb des Gehäuses ist jedoch relativ aufwendig, da elektrische Leitungen durch die Gehäusewand hindurch geführt werden müssen, und da praktisch keine Kühlung der Strahlungsquelle möglich ist. Diese Druckschrift erwähnt eine Literaturstelle, aus der es bekannt ist, eine Kaltkathodenentladung mit UV-Licht zu starten, welches durch eine Glashülle in das Messgerät eingeleitet wird. Obwohl Glas nicht sehr transparent für UV-Licht ist, habe das energetische UV-Licht ausgereicht, um Photoelektronen aus der Kathode zu befreien und dadurch zum Starten der Entladung beizutragen. Auf diesen Stand der Technik nimmt der Oberbegriff des Patentanspruchs 1 Bezug.

Der Erfindung liegt die Aufgabe zugrunde, einen Kaltkathoden-Drucksensor zu schaffen, bei dem eine Nicht-UV-Strahlungsquelle zum Zünden ausreicht.

Diese Aufgabe wird erfindungsgemäß gelöst mit den Merkmalen des Patentanspruches 1.

Bei dem erfindungsgemäßen Kaltkathoden-Drucksensor besteht das Gehäuse mindestens teilweise aus Glas, bevorzugt aus Quarz-Glas. Die Strahlungsquelle ist nicht innerhalb, sondern außerhalb des Gehäuses angeordnet und strahlt durch das Gehäuse-Glas auf die Metall-Kathode. Die Strahlungsquelle strahlt im Wesentlichen Strahlung einer Wellenlänge $\lambda$ von mehr als 350 nm und weniger als 1400 nm aus. Versuche haben ergeben, dass auch Strahlung geringerer Photonen-Energie als der von UV-Strahlung geeignet ist, unter bestimmten Voraussetzungen in dem Kathoden-Metall Photonen durch Photoeffekt auszulösen. Hierzu muss die Feldstärke E in dem betreffenden Bereich der Kathode mindestens mehrere kV/cm betragen. Durch das starke elektrische Feld nimmt die Austrittswahrscheinlichkeit für Photoeffekt-Elektronen so weit zu, dass energieärmere Strahlung als UV-Strahlung, und damit eine Strahlungsquelle mit einer Wellenlänge von mehr als 350 nm, zum Zünden der Entladung verwendet werden kann. Die auftretenden Feldstärken dürfen nicht zu groß gewählt werden, da sonst durch austretende Feldeffekt-Elektronen das Ergebnis der Druckmessung verfälscht werden würde.

Durch Anordnen der Strahlungsquelle außerhalb des Gehäuses entfällt die Durchführung von elektrischen Leitungen durch die Gehäusewand und entfallen Probleme, die ggf. aus dem Kühlungserfordernis für die Strahlungsquelle resultieren. Der Aufbau eines derartigen Kaltkathoden-Drucksensors ist einfach und preiswert realisierbar.

Das Gehäuse besteht mindestens teilweise aus Glas. Glas-Gehäuse sind wegen ihrer vakuumtechnischen Eigenschaften gut geeignet und häufig verwendet als Gehäusematerial. Glas ist ferner für Strahlung mit einer größeren Wellenlänge als der von UV-Licht weitgehend durchlässig.

Nach der Erfindung sind der Krümmungsradius $r_0$ der anodennächsten Kante der Kathode und die Spannung $U_{AK}$ zwischen der Anode und der Kathode so gewählt, dass die Feldstärke E im Bereich der anodennächsten Kante der Kathode größer als 10 kV/cm und kleiner als 1 GV/cm ist. Bei einer Feldstärke E von mehr als 10 kV/cm wird die für den Photoeffekt erforderliche Photonen-Energie bereits so verringert, dass eine Nicht-UV-Strahlungsquelle zum Zünden in der Regel ausreicht.

Gemäß einer bevorzugten Ausgestaltung ist der Krümmungsradius $r_0$ der anodennächsten Kante der Kathode kleiner als 0,1 mm. Bereits bei Krümmungsradien $r_0$ von weniger als 0,1 mm lassen sich bei einer Spannung $U_{AK}$ zwischen der Anode und der Kathode von wenigen kV Feldstärken realisieren, die den Einsatz von Strahlungsquellen mit einer Strahlungsenergie von weniger als 4 eV erlauben, um den Photoeffekt im Kathoden-Metall auszulösen.

Insbesondere kann der Krümmungsradius $r_0$ der anodennächsten Kathoden-Kante kleiner als 0,05 mm sein.

Vorzugsweise ist die Wellenlänge λ der von der Strahlungsquelle emittierten Strahlung größer als 400 nm, vorzugsweise größer als 500 nm und, besonders bevorzugt, größer als 600 nm. Die Strahlungsleistung der Strahlungsquelle sollte mindestens 1 mW betragen. Als Strahlungsquelle sind Blitzentladungslampen, oder Glühlampen, insbesondere jedoch Leuchtdioden geeignet. Versuche mit roten Leuchtdioden haben gezeigt, dass die von Ihnen erzeugte Photonen-Energie zur Auslösung des Photoeffektes in der Regel ausreichend ist. Eine "weiße" Leuchtdiode hat einen Anteil an relativ kurzwelliger "blauer" Strahlung, die auch bei ungünstigen Umständen eine für den Photoeffekt ausreichende Photonen-Energie zur Verfügung stellt.

Leuchtdioden lassen sich mit einfachen Mitteln preiswert betreiben und weisen eine hohe Lebensdauer auf.

Gemäß einer bevorzugten Ausgestaltung wird die Anode als Ring und werden die Kathoden von zwei Platten axial des Anodenringes gebildet. Alternativ kann die Kathode auch als Stab ausgebildet sein, der koaxial in dem Anoden-Ring angeordnet ist. In jedem Fall sollte die Strahlung der Strahlungsquelle direkt auf die Kathode, bzw. auf die anodennächste Kante der Kathode, gerichtet sein.

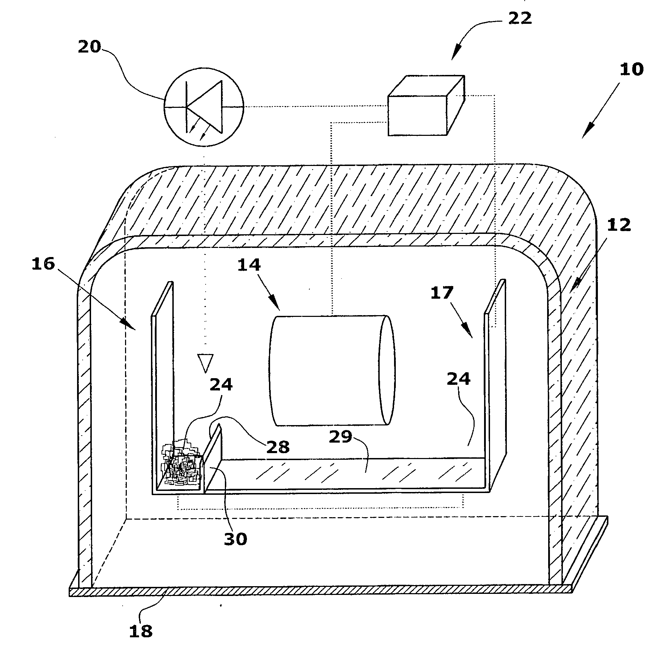

Im Folgenden wird unter Bezugnahme auf die Zeichnung ein Ausführungsbeispiel der Erfindung näher erläutert.

Die Figur zeigt einen erfindungsgemäßen als Penning-Messzelle ausgebildeten Kaltkathoden-Drucksensor mit einem gasdichten Glas-Gehäuse und einer außerhalb des Gehäuses angeordneten Strahlungsquelle.

In der Figur ist ein Kaltkathoden-Drucksensor 10 dargestellt, der ein einstückiges Glas-Gehäuse 12, eine zylinderringförmige Anode 14 und zwei im Wesentlichen plattenförmige Metall-Kathoden 16,17, einen Testgas-Einlass 18, eine Strahlungsquelle 20 außerhalb des Gehäuses 12 und eine Steuer- und Messvorrichtung 22 außerhalb des Gehäuses 12 aufweist.

Das Gehäuse 12 besteht aus Quarz-Glas, das für Strahlung im sichtbaren Bereich weitgehend durchlässig ist, gute Gasdichtigkeit und eine vernachlässigbare Gasemissivität aufweist. Das Gehäuse 12 ist im Wesentlichen quaderförmig. Der Testgas-Einlass 18 ist gasselektiv, und beispielsweise als beheizbare Silizium-Scheibe ausgebildet, die nur für niedermolekulare Gase durchlässig ist.

Die Anode 14 ist zylinderringförmig und besteht aus Edelstahl. Die beiden Kathoden 16,17 bestehen aus parallelen Titanblechen. Die unteren Enden der Titanbleche sind durch eine Platte 29 verbunden, so dass sich eine rechtwinklige U-förmige Gesamt-Geometrie ergibt. Der einen Titanblech-Kathode 16 ist beabstandet ein paralleles kürzeres Kanten-Blech 30 zugeordnet, das senkrecht von der Verbindungs-Platte 29 abragt. In der hierdurch gebildeten Rinne liegt Gettermaterial 24. Das Kanten-Blech 30 weist eine anodennächste Kathoden-Kante 28 auf.

Die Steuer- und Messvorrichtung 22 dient der Generierung einer Betriebsspannung $U_{AK}$ zwischen der Anode 14 und den Kathoden 16, der Messung des elektrischen Stromes zwischen der Anode 14 und den Kathoden 16 sowie der Steuerung der Strahlungsquelle 20.

Unterhalb von Drücken von $10^{-9}$ - $10^{-10}$ mbar ist die Zündwahrscheinlichkeit so gering, dass die Zündung von außen angeregt werden muss.

Die Austrittswahrscheinlichkeit D eines Elektrons in Metall wird wie folgt berechnet:

$$D = \exp\left[ - \frac{2\,U}{\hbar\,E} \sqrt{2 m_e (U - W)} \right]$$

wobei

U: Austrittsarbeit des Elektrons in einem Metall
E: Feldstärke, die vor dem Metall wirkt
W: Energie der Photonen, die auf die Metalloberfläche treffen
$m_e$: Masse eines Elektrons
$\hbar$ : Plancksches Wirkungsquantum

ist.

Die Spannung $U_{AK}$ zwischen der Anode 14 und den Kathoden 16,17 beträgt ungefähr 3 kV. Der Krümmungsradius $r_0$ der anodennächsten Kante 28 des Kathoden-Bleches 30 beträgt ungefähr 10 μm. Hieraus resultiert an der anodennächsten Kante 28 eine Feldstärke E von 1.000-10.000 kV/cm.

Als Strahlungsquelle 20 dient eine "weiße" Leuchtdiode, die im Wesentlichen Photonen einer Wellenlänge λ von 400 nm bis 1.300 nm emittiert. Die Strahlungsquelle hat eine Leistung von ungefähr 0,1 W, was ungefähr $10^{17}$ Photonen pro Sekunde entspricht. Die Strahlungsquelle 20 muss für ein Funktionieren der Zündung eine Mindestleistung von 1 mW aufweisen. Unterhalb dieser Leistung findet nur eine stark verzögerte Zündung statt, oberhalb dieser Leistung verkürzt sich der Zündvorgang.

Die beschriebenen und im Experiment nachgewiesenen Beispiele zeigen, dass bei Generierung stärkerer elektrischer Felder Zündstrahlung einer Wellenlänge oberhalb der von UV-Strahlung verwendet werden kann. Erst hierdurch wird ermöglicht, die Zünd-Strahlungsquelle außerhalb des Gehäuses anzuordnen, da das als Gehäusematerial bevorzugte Glas zwar UV-Strahlung absorbiert, langwelligere Strahlung jedoch nahezu ungehindert hindurch treten lässt.

Auf diese Weise lässt sich eine einfache und preiswerte Zündanordnung außerhalb des Gehäuses realisieren.

## Patentansprüche

1. Kaltkathoden-Drucksensor (10) mit
einem gasdichten Gehäuse (12) mit einem Testgas-Einlass (18),
einer Anode (14) und einer Kathode (16,17) in dem Gehäuse (12), und einer auf die Kathode gerichteten Strahlungsquelle (20) zum Zünden einer Kaltkathoden-Entladung,
wobei das Gehäuse (12) mindestens teilweise aus Glas gebildet ist,
wobei die Strahlungsquelle (20) außerhalb des Gehäuses (12) angeordnet ist und durch das Gehäuse-Glas auf die Kathode (16,17) strahlt,
und wobei die Strahlungsquelle (20) im Wesentlichen Strahlung einer Wellenlänge $\lambda$ von mehr als 350 nm und weniger als 1.400 nm ausstrahlt,
**dadurch gekennzeichnet,**
**dass** der Krümmungsradius $r_0$ der anodennächsten Kante (28) der Kathode (16) und die elektrische Spannung $U_{AK}$ zwischen der Anode (14) und der Kathode (16,17) so gewählt sind, dass die Feldstärke E im Bereich der Kante (28) der Kathode (16,17) größer als 10 kV/cm und kleiner als 1 GV/cm ist.

2. Kaltkathoden-Drucksensor (10) nach Anspruch 1, **dadurch gekennzeichnet, dass** der Krümmungsradius $r_0$ der anodennächsten Kante (28) der Kathode (16,17) kleiner als 0,1 mm ist.

3. Kaltkathoden-Drucksensor (10) nach Anspruch 1 oder 2, **dadurch gekennzeichnet, dass** der Krümmungsradius $r_0$ der anodennächsten Kante (28) der Kathode (16,17) kleiner als 0,05 mm ist.

4. Kaltkathoden-Drucksensor (10) nach einem der Ansprüche 1 bis 3, **dadurch gekennzeichnet, dass** die Strahlungsquelle (20) im Wesentlichen Strahlung einer Wellenlänge von mehr als 400 nm, insbesondere von mehr als 500 nm und, besonders bevorzugt, von mehr als 600 nm ausstrahlt.

5. Kaltkathoden-Drucksensor (10) nach einem der Ansprüche 1 bis 4, **dadurch gekennzeichnet, dass** die Strahlungsleistung der Strahlungsquelle (20) größer als 1 mW ist.

6. Kaltkathoden-Drucksensor (10) nach einem der Ansprüche 1 bis 5, **dadurch gekennzeichnet, dass** die Anode (14) als Ring und die Kathoden (16,17) als zwei Platten axial der Ringanode (14) ausgebildet sind.

7. Kaltkathoden-Drucksensor (10) nach einem der Ansprüche 1 bis 6, **dadurch gekennzeichnet, dass** das Gehäuse-Glas Quarz-Glas ist.

8. Kaltkathoden-Drucksensor (10) nach einem der Ansprüche 1 bis 7, **dadurch gekennzeichnet, dass** die Strahlungsquelle (20) eine Leuchtdiode ist.

## Claims

1. A cold cathode pressure sensor (10) comprising
a gastight housing (12) having a test gas inlet (18),
an anode (14) and a cathode (16,17) arranged in said housing (12), and
a radiation source (20) directed to said cathode for igniting a cold cathode discharge,
said housing (12) being at least partly made of glass,
said radiation source (20) being arranged outside said housing (12) and irradiates said cathode (16,17) through the housing glass,
and said radiation source (20) substantially emits a radiation of a wavelength $\lambda$ of more than 350 nm and less than 1,400 nm,
**characterized in**
**that** the radius of curvature $r_0$ of the edge (28) of the cathode (16) that is located closest to the anode, and the electrical voltage $U_{AK}$ between the anode (14) and said cathode (16,17) are selected such that the field strength E in the region of said edge (28) of said cathode (16,17) is larger than 10 kV/cm and smaller than 1 GV/cm.

2. The cold cathode pressure sensor (10) according to claim 1, **characterized in that** the radius of curvature $r_0$ of the edge (28) of the cathode (16,17) that is located closest to the anode is smaller than 0.1 mm.

3. The cold cathode pressure sensor (10) according to claim 1 or 2, **characterized in that** the radius of curvature $r_0$ of the edge (28) of the cathode (16,17) that is located closest to the anode is smaller than 0.05 mm.

**4.** The cold cathode pressure sensor (10) according to any one of claims 1 to 3, **characterized in that** the radiation source (20) substantially emits radiation of a wavelength of more than 400 nm, in particular more than 500 nm, and more preferably more than 600 nm.

**5.** The cold cathode pressure sensor (10) according to any one of claims 1 to 4, **characterized in that** the radiation power of the radiation source (20) is larger than 1 mW.

**6.** The cold cathode pressure sensor (10) according to any one of claims 1 to 5, **characterized in that** the anode (14) is configured as a ring, and the cathodes (16,17) are defined by two plates arranged axially to the ring anode (14).

**7.** The cold cathode pressure sensor (10) according to any one of claims 1 to 6, **characterized in that** the housing glass is quartz glass.

**8.** The cold cathode pressure sensor (10) according to any one of claims 1 to 7, **characterized in that** the radiation source (20) is a light emitting diode.

**Revendications**

**1.** Capteur de pression à cathode froide (10), comprenant :

un boîtier (12) étanche au gaz, pourvu d'une entrée de gaz de test (18),
une anode (14) et une cathode (16, 17) situées dans le boîtier (12), et
une source de rayonnement (20) dirigée sur la cathode, destinée à déclencher une décharge de la cathode froide,
le boîtier (12) étant constitué, au moins partiellement, de verre,
la source de rayonnement (20) étant disposée à l'extérieur du boîtier (12) et irradiant la cathode (16, 17) à travers le verre du boîtier, la source de rayonnement (20) émettant sensiblement un rayonnement d'une longueur d'ondes supérieure $\lambda$ à 350 nm et inférieure à 1400 nm,
**caractérisé en ce que**
le rayon de courbure $r_0$ du bord (28) de la cathode (16) le plus proche de l'anode et la tension électrique $U_{AK}$ entre l'anode (14) et la cathode (16, 17) sont choisis de sorte que l'intensité de champ E dans la région du bord (28) de la cathode (16, 17) soit supérieure à 10 kV/cm et inférieure à 1 GV/cm.

**2.** Capteur de pression à cathode froide (10) selon la revendication 1, **caractérisé en ce que** le rayon de courbure $r_0$ du bord (28) de la cathode (16, 17) le plus proche de l'anode est inférieur à 0,1 mm.

**3.** Capteur de pression à cathode froide (10) selon la revendication 1 ou 2, **caractérisé en ce que** le rayon de courbure $r_0$ du bord (28) de la cathode (16, 17) le plus proche de l'anode est inférieur à 0,05 mm.

**4.** Capteur de pression à cathode froide (10) selon l'une des revendications 1 à 3, **caractérisé en ce que** la source de rayonnement (20) émet sensiblement un rayonnement d'une longueur d'ondes supérieure à 400 nm, en particulier supérieure à 500 nm, plus préférablement supérieure à 600 nm.

**5.** Capteur de pression à cathode froide (10) selon l'une des revendications 1 à 4, **caractérisé en ce que** la puissance de rayonnement de la source de rayonnement (20) est supérieure à 1 mW.

**6.** Capteur de pression à cathode froide (10) selon l'une des revendications 1 à 5, **caractérisé en ce que** l'anode (14) est réalisée sous forme d'anneau et les cathodes (16, 17) sous forme de deux plaques disposées axialement par rapport à l'anode annulaire (14).

**7.** Capteur de pression à cathode froide (10) selon l'une des revendications 1 à 6, **caractérisé en ce que** le verre du boîtier est un verre de quartz.

**8.** Capteur de pression à cathode froide (10) selon l'une des revendications 1 à 7, **caractérisé en ce que** la source de rayonnement (20) est une diode lumineuse.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5157333 A